(19) Europäisches Patentamt
European Patent Office
Office européen des brevets

(11) **EP 3 636 516 B1**

(12) **EUROPEAN PATENT SPECIFICATION**

(45) Date of publication and mention
of the grant of the patent:
**21.07.2021 Bulletin 2021/29**

(51) Int Cl.:
***B62D 5/00*** *(2006.01)*  ***B62D 6/10*** *(2006.01)*

(21) Application number: **19201423.1**

(22) Date of filing: **04.10.2019**

(54) **DRIVER TORQUE ESTIMATION DEVICE AND ELECTRIC POWER STEERING SYSTEM**

FAHRERDREHMOMENTSCHÄTZVORRICHTUNG UND ELEKTRISCHE SERVOLENKUNG

DISPOSITIF D'ESTIMATION DE COUPLE DE CONDUCTEUR ET SYSTÈME À DIRECTION ASSISTÉE ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.10.2018 JP 2018191000**

(43) Date of publication of application:
**15.04.2020 Bulletin 2020/16**

(73) Proprietor: **JTEKT CORPORATION**
**Osaka-shi,**
**Osaka 542-8502 (JP)**

(72) Inventors:
• **MOREILLON, Maxime**
**Osaka-shi, Osaka 542-8502 (JP)**
• **TAMURA, Tsutomu**
**Osaka-shi, Osaka 542-8502 (JP)**
• **FUCHS, Robert**
**Osaka-shi, Osaka 542-8502 (JP)**

(74) Representative: **Winter, Brandl - Partnerschaft mbB**
**Alois-Steinecker-Straße 22**
**85354 Freising (DE)**

(56) References cited:
**EP-A1- 1 508 500        EP-A2- 3 184 404**
**JP-A- 2006 182 053      US-A1- 2014 360 803**
**US-A1- 2017 350 777**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

BACKGROUND OF THE INVENTION

1. Field of the Invention

The present invention relates to a driver torque estimation device and an electric power steering system that enable estimation of driver torque applied to a steering wheel by a driver.

2. Description of Related Art

Japanese Unexamined Patent Application Publication No. 2006-151360 discloses a steering system that includes a steering torque sensor that detects torsion of a torsion bar, a steering angle sensor that detects the rotational angle (steering angle) of a column shaft, and a torque generation unit that computes steering wheel-end torque (driver torque) based on a steering torque detection value obtained by the steering torque sensor and a steering angle detection value obtained by the steering angle sensor.

Document EP1508500A1 shows a driver torque estimation device according to the preamble of claim 1.

SUMMARY OF THE INVENTION

The present invention provides a driver torque estimation device and an electric power steering system that allow high-precision estimation of driver torque.

A first aspect of the present invention provides a driver torque estimation device. The driver torque estimation device includes: a transfer ratio variation device and a torsion bar provided on a torque transfer path between a steering wheel and a steering mechanism; an electric motor configured to apply a steering assist force to the steering mechanism; a torque sensor that acquires torsion bar torque applied to the torsion bar; an input shaft rotation acquisition unit configured to acquire a rotational angle of an input shaft of the transfer ratio variation device; and an electronic control unit that is configured to acquire a rotational angle of an output shaft of the transfer ratio variation device. The electronic control unit is configured to compute an estimated value of first disturbance due to a first electric power steering constituent member, which is positioned on an input shaft side of the transfer ratio variation device, using the rotational angle of the input shaft. The first disturbance acts on at least one of the steering wheel and the input shaft between the steering wheel and the transfer ratio variation device. The electronic control unit is configured to compute an estimated value of second disturbance due to a second electric power steering constituent member, which is positioned on an output shaft side of the transfer ratio variation device, using the rotational angle of the output shaft. The second disturbance acts on a rotary shaft between the transfer ratio variation device and the torsion bar. The electronic control unit is configured to compute an estimated value of driver torque based on the torsion bar torque, the estimated value of the first disturbance, and the estimated value of the second disturbance.

With the configuration described above, the driver torque is computed in consideration of not only the torsion bar torque but also the estimated value of the first disturbance, which acts on the steering wheel because of the first electric power steering constituent member that is positioned on the input shaft side of the transfer ratio variation device, and the estimated value of the second disturbance, which acts on the steering wheel because of the second electric power steering constituent member that is positioned on the output shaft side of the transfer ratio variation device. Thus, the driver torque can be estimated precisely.

In the driver torque estimation device, the electronic control unit may be configured to estimate at least one of inertial torque based on the first electric power steering constituent member, viscous friction torque, coulomb friction torque, rotating unbalance torque, and spiral cable torque.

In the driver torque estimation device, the electronic control unit may be configured to estimate at least one of inertial torque based on the second electric power steering constituent member, viscous friction torque, Coulomb friction torque, and spiral cable torque.

In the driver torque estimation device, the electronic control unit may be configured to acquire the rotational angle of the output shaft using a rotational angle of the electric motor and the torsion bar torque.

In the driver torque estimation device, the electronic control unit may be configured to acquire the rotational angle of the input shaft using a rotational angle of the electric motor, the torsion bar torque, and a rotational angle difference between the input shaft and the output shaft.

The driver torque estimation device may further include a rotational angle sensor configured to detect a rotational angle of the steering wheel. The electronic control unit may be configured to acquire the rotational angle of the input shaft based on an output signal from the rotational angle sensor.

A second aspect of the present invention provides an electric power steering system. The electric power steering system includes: a transfer ratio variation device and a torsion bar provided on a torque transfer path between a steering wheel and a steering mechanism; an electric motor configured to apply a steering assist force to the steering mechanism; a torque sensor that acquires torsion bar torque applied to the torsion bar; an input shaft rotation acquisition unit configured to acquire a rotational angle of an input shaft of the transfer ratio variation device; and an electronic control unit that is configured to acquire a rotational angle of an output shaft of the transfer ratio variation device. The electronic control unit is configured to compute an estimated value of first disturbance due to a first electric power steering constituent member, which is positioned on an input shaft side of the transfer ratio variation device, using the rotational angle of the input shaft. The first disturbance acts on at least one of the steering wheel and the input shaft between the steering wheel and the transfer ratio variation device. The electronic control unit is configured to compute an estimated value of second disturbance due to a second electric power steering constituent member, which is positioned on an output shaft side of the transfer ratio variation device, using the rotational angle of the output shaft. The second disturbance acts on a second rotary shaft between the transfer ratio variation device and the torsion bar. The electronic control unit is configured to compute an estimated value of driver torque based on the torsion bar torque, the estimated value of the first disturbance, and the estimated value of the second disturbance. The electronic control unit is configured to determine, based on the estimated value of the driver torque, whether a hands-on state is established or a hands-off state is established.

BRIEF DESCRIPTION OF THE DRAWINGS

Features, advantages, and technical and industrial significance of exemplary embodiments of the invention will be described below with reference to the accompanying drawings, in which like numerals denote like elements, and wherein:

FIG. 1 is a schematic diagram illustrating a schematic configuration of an electric power steering system to which a driver torque estimation device according to a first embodiment of the present invention is applied;
FIG. 2 is a block diagram illustrating the electric configuration of an ECU;
FIG. 3 is a block diagram illustrating the electric configuration of a steering wheel operation state determination unit;
FIG. 4 is a graph illustrating an example of a relationship between a steering wheel angular speed estimated value $d\theta_{sw}/dt$ and a first viscous friction torque compensation value $T_{c1}$;
FIG. 5A is a schematic front view illustrating a position of a center of gravity of a steering wheel and a central axis of a first shaft;
FIG. 5B is a schematic side view of FIG. 5A;
FIG. 6 is a graph illustrating an example of a relationship between a steering wheel angle estimated value $\theta_{sw}$ and a rotating unbalance torque compensation value $T_{ru}$;
FIG. 7 is a graph illustrating an example of a relationship between the steering wheel angular speed estimated value $d\theta_{sw}/dt$ and a first Coulomb friction torque compensation value $T_{fr1}$;
FIG. 8 is a graph illustrating another example of a relationship between the steering wheel angular

speed estimated value $d\theta_{sw}/dt$ and the first Coulomb friction torque compensation value $T_{fr1}$;
FIG. 9 is a block diagram illustrating the configuration of a driver torque estimation unit;
FIG. 10 illustrates state transition for explaining operation of a hands-on/off determination unit; and
FIG. 11 is a block diagram illustrating a specific example of a configuration of a driver torque estimation unit according to a second embodiment.

DETAILED DESCRIPTION OF EMBODIMENTS

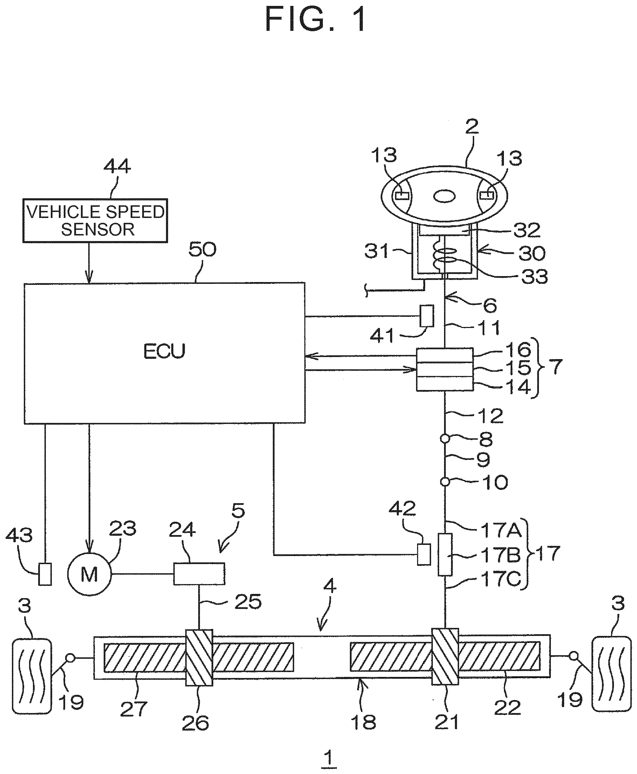

FIG. 1 is a schematic diagram illustrating a schematic configuration of an electric power steering system to which a steering device according to a first embodiment of the present invention is applied. An electric power steering system (vehicle steering device) 1 is a dual pinion-type electric power steering system (hereinafter referred to as a "dual pinion-type EPS") that has a first pinion shaft coupled to a steering shaft and a second pinion shaft not coupled to the steering shaft, with a steering assist mechanism provided on the second pinion shaft.
The dual pinion-type EPS 1 includes a steering wheel 2 that serves as a steering member used to steer a vehicle, a steering mechanism 4 that steers steered wheels 3 in conjunction with rotation of the steering wheel 2, and a steering assist mechanism 5 that assists a driver in steering. The steering wheel 2 and the steering mechanism 4 are mechanically coupled to each other via a steering shaft 6, a transfer ratio variation device 7, a first universal joint 8, an intermediate shaft 9, and a second universal joint 10.
The steering shaft 6 includes a first shaft 11 that serves as an input shaft of the transfer ratio variation device 7, and a second shaft 12 that serves as an output shaft of the transfer ratio variation device 7. The steering wheel 2 is coupled to one end of the first shaft 11. The other end of the first shaft 11 and one end of the second shaft 12 are coupled so as to be differentially rotatable via the transfer ratio variation device 7. The other end of the second shaft 12 is coupled to the intermediate shaft 9 via the first universal joint 8.
Electronic components 13 that include various types of switches are mounted on the steering wheel 2. A spiral cable device 30 is coupled to the first shaft 11. The spiral cable device 30 includes a stator 31, a rotator 32, and a spiral cable 33. The stator 31 is fixed to the vehicle body side. The stator 31 has a first connector (not illustrated). The rotator 32 is attached so as to be rotatable relative to the stator 31. The rotator 32 is fixed to the steering wheel 2 or the first universal joint 8 so as to be rotatable together with the first universal joint 8. The rotator 32 has a second connector (not illustrated).
The spiral cable 33 is housed in a space defined by the stator 31 and the rotator 32. One end of the spiral cable 33 is connected to the second connector of the rotator 32. The second connector is electrically connected to the electronic components 13 that are mounted on the steering wheel 2 via a connection cable (not illustrated). The other end of the spiral cable 33 is connected to the first connector of the stator 31. The first connector is electrically connected to a device on the vehicle body side (e.g. a device corresponding to the various types of switches) via a connection cable (not illustrated).

A steered angle sensor 41 that detects a steering angle $\theta_h$, which is the rotational angle of the first shaft 11, is disposed around the first shaft 11. In the embodiment, the steered angle sensor 41 detects the amount of rotation (rotational angle) of the first shaft 11 in the forward and reverse directions from the neutral position of the first shaft 11. The steered angle sensor 41 outputs the amount of rotation to the left from the neutral position as a positive value, for example, and outputs the amount of rotation to the right from the neutral position as a negative value, for example.

The transfer ratio variation device 7 changes the ratio of a rotational angle $\theta_r$ of the second shaft 12 to a rotational angle (corresponding to the steering angle $\theta_h$) of the first shaft 11. The transfer ratio variation device 7 has a differential mechanism 14 that couples the first shaft 11 and the second shaft 12 so as to be differentially rotatable, an electric motor 15 that drives the differential mechanism 14, and a rotational angle sensor 16 that detects a rotational angle $\theta_v$ of a rotor of the electric motor 15. In the embodiment, the electric motor 15 is a three-phase brushless motor. In the following description, the electric motor 15 is occasionally referred to as a "VGR motor 15". The transfer ratio variation device 7 is controlled by an electronic control unit (ECU) 50 to be discussed later.

The steering mechanism 4 is composed of a rack-and-pinion mechanism that includes a first pinion shaft 17 and a rack shaft 18 that serves as a steered shaft. The steered wheels 3 are coupled to respective end portions of the rack shaft 18 via tie rods 19 and knuckle arms (not illustrated). The first pinion shaft 17 includes an input shaft 17A coupled to the intermediate shaft 9 via the second universal joint 10, an output shaft 17C to which a first pinion 21 is coupled, and a torsion bar 17B that couples the input shaft 17A and the output shaft 17C to each other.

A torque sensor 42 is provided around the first pinion shaft 17. The torque sensor 42 detects torsion bar torque $T_{tb}$ applied to the torsion bar 17B based on the amount of relative rotational displacement between the input shaft 17A and the output shaft 17C, that is, the warp angle of the torsion bar 17B. The rack shaft 18 extends linearly along the right-left direction of the vehicle. A first rack 22 meshed with the first pinion 21 is formed on a first end portion side of the rack shaft 18 in the axial direction.

When the steering wheel 2 is operated (rotated), rotation of the steering wheel 2 is transferred to the first pinion shaft 17 via the steering shaft 6 and the intermediate shaft 9. Rotation of the first pinion shaft 17 is converted into movement of the rack shaft 18 in the axial direction by the first pinion 21 and the first rack 22. Consequently, the steered wheels 3 are steered. The steering assist mechanism 5 includes an electric motor 23, a speed reducer 24, a second pinion shaft 25, a second pinion 26, and a second rack 27. In the embodiment, the electric motor 23 is a three-phase brushless motor. In the following description, the electric motor 23 is occasionally referred to as an "EPS motor 23".

The second pinion shaft 25 is disposed separately from the steering shaft 6. Thus, the second pinion shaft 25 is not directly coupled to the steering shaft 6. The speed reducer 24 is composed of a worm gear mechanism that includes a worm shaft (not illustrated) coupled so as to be rotatable together with an output shaft of the EPS motor 23, and a worm wheel (not illustrated) meshed with the worm shaft and coupled so as to be rotatable together with the second pinion shaft 25.

The second pinion 26 is coupled to the distal end of the second pinion shaft 25. The second rack 27 is provided on a second end portion side of the rack shaft 18 in the axial direction. The second pinion 26 is meshed with the second rack 27. In the following description, the speed reduction ratio (gear ratio) of the speed reducer 24 is occasionally represented by $r_{wg}$. The speed reduction ratio $r_{wg}$ is defined as a ratio $\omega_{wg}/\omega_{ww}$ of an angular speed $\omega_{wg}$ of the worm gear to an angular speed $\omega_{ww}$ of the worm wheel.

When the EPS motor 23 is rotationally driven, rotation of the EPS motor 23 is transferred to the second pinion shaft 25 via the speed reducer 24. Rotation of the second pinion shaft 25 is converted into movement of the rack shaft 18 in the axial direction by the second pinion 26 and the second rack 27. Consequently, the steered wheels 3 are steered. That is, with the second pinion shaft 25 rotationally driven by the EPS motor 23, steering assist by the EPS motor 23 is enabled for movement of the rack shaft 18 in the axial direction and steering of the steered wheels 3 based on steering of the steering wheel 2.

The rotational angle (hereinafter referred to as a "rotor rotational angle $\theta_m$") of a rotor of the EPS motor 23 is detected by a rotational angle sensor 43 such as a resolver. A vehicle speed V is detected by a vehicle speed sensor 44. The steering angle $\theta_h$ that is detected by the steered angle sensor 41, the torsion bar torque $T_{tb}$ that is detected by the torque sensor 42, the vehicle speed V that is detected by the vehicle speed sensor 44, and output signals from the rotational angle sensors 16 and 43 are input to the ECU 50. The VGR motor 15 and the EPS motor 23 are controlled by the ECU 50.

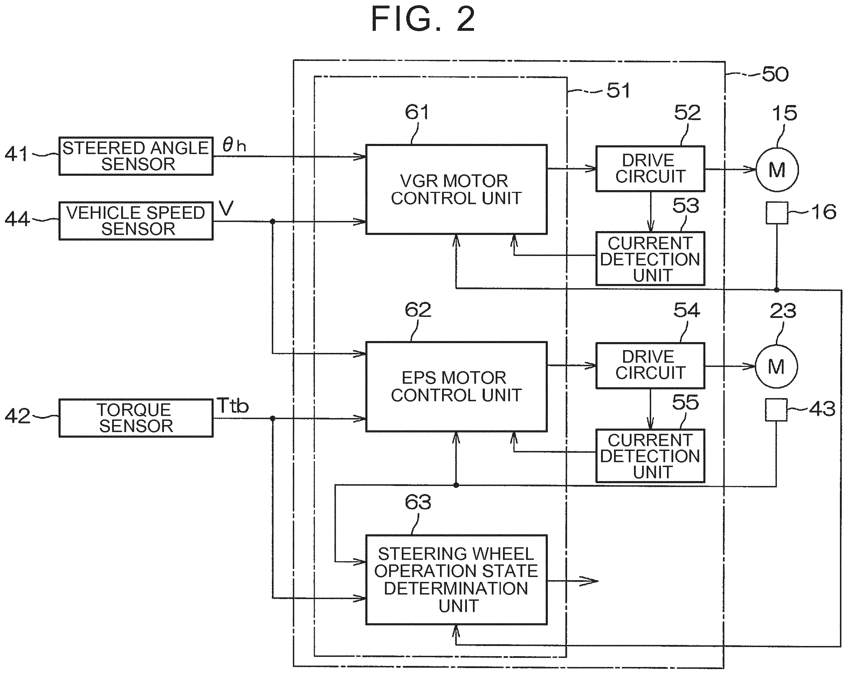

FIG. 2 is a schematic diagram illustrating the electric configuration of the ECU 50. The ECU 50 includes a microcomputer 51, a drive circuit 52 that supplies electric power to the VGR motor 15, a current detection unit 53 that detects a current that flows through the VGR motor 15, a drive circuit 54 that supplies electric power to the EPS motor 23, and a current detection unit 55 that detects a current that flows through the EPS motor 23.

The microcomputer 51 includes a central processing unit (CPU) and a memory (such as a read-only memory (ROM), a random-access memory (RAM), and a nonvolatile memory), and executes a predetermined program to function as a plurality of function processing units. The plurality of function processing units include a VGR motor control unit 61, an EPS motor control unit 62, and a steering wheel operation state determination unit 63. The VGR motor control unit 61 controls the drive circuit 52 based on the vehicle speed V that is detected by the vehicle speed sensor 44, the steering angle $\theta_h$ that is detected by the steered angle sensor 41, the rotational angle $\theta_v$ of the rotor of the VGR motor 15 that is detected by the rotational angle sensor 16, and the motor current that is detected by the current detection unit 53, for example.

Specifically, the VGR motor control unit 61 computes a target act angle $\theta_{act*}$ based on the vehicle speed V and the steering angle $\theta_h$. For example, the VGR motor control unit 61 computes the target act angle $\theta_{act*}$ such that the target act angle $\theta_{act*}$ is larger as the vehicle speed is lower and the ratio $\theta_r/\theta_h$ of the rotational angle $\theta_r$ of the second shaft 12 to the rotational angle $\theta_h$ of the first shaft 11 is higher as the absolute value of the steering angle is smaller. The VGR motor control unit 61 controls drive of the drive circuit 52 such that an actual act angle $\theta_{act}$, which is computed based on the rotational angle $\theta_v$ of the rotor, becomes equal to the target act angle $\theta_{act*}$. The actual act angle $\theta_{act}$ is an angle that matches the difference $(\theta_r - \theta_h)$ between the rotational angle $\theta_r$ of the second shaft 12 and the rotational angle $\theta_h$ of the first shaft 11.

The EPS motor control unit 62 controls drive of the drive circuit 54 based on the vehicle speed V that is detected by the vehicle speed sensor 44, the torsion bar torque $T_{tb}$ that is detected by the torque sensor 42, the rotor rotational angle of the EPS motor 23 that is computed based on the output from the rotational angle sensor 43, and the motor current that is detected by the current detection unit 55, for example. Specifically, the EPS motor control unit 62 sets a current command value, which is a target value for the motor current that flows through the EPS motor 23, based on the torsion bar torque $T_{tb}$ and the vehicle speed V. The current command value corresponds to a target value for a steering assist force (assist torque) that matches the steering condition. The EPS motor control unit 62 controls drive of the drive circuit 54 such that the motor current that is detected by the current detection unit 55 approximates the current command value. Consequently, appropriate steering assist that matches the steering condition is achieved.

The steering wheel operation state determination unit 63 determines, based on the torsion bar torque $T_{tb}$ that is detected by the torque sensor 42, the rotor rotational angle $\theta_m$ of the EPS motor 23 that is computed based on the output from the rotational angle sensor 43, and the actual act angle $\theta_{act}$ (= $(\theta_r - \theta_h)$) that is computed based on the output from the rotational angle sensor 16, whether a hands-on state in which the driver is grasping the steering wheel is established or a hands-off state (hands-free state) in which the driver is not grasping the steering wheel is established.

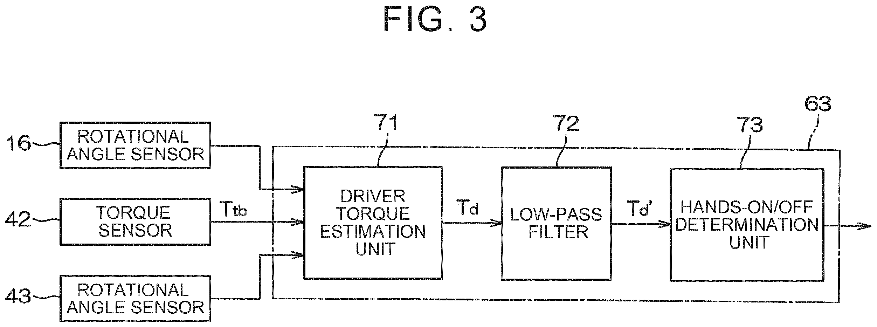

FIG. 3 is a block diagram illustrating the electric configuration of the steering wheel operation state determination unit 63. The steering wheel operation state determination unit 63 includes a driver torque estimation unit 71, a low-pass filter 72, and a hands-on/off determination unit 73. The driver torque estimation unit 71 estimates driver torque $T_d$ based on the output signals from the rotational angle sensors 16 and 43 and the torsion bar torque $T_{tb}$ that is detected by the torque sensor 42.

The low-pass filter 72 performs a low-pass filter process on the driver torque $T_d$ that is estimated by the driver torque estimation unit 71. The hands-on/off determination unit 73 determines whether a hands-on state is established or a hands-off state is established based on driver torque $T_d$' after being subjected to the low-pass filter process by the low-pass filter 72. Such processes will be described below. In the following description, a constituent member of the EPS 1 positioned on a first shaft (input shaft) 11 side of the transfer ratio variation device 7 is referred to as a "first EPS constituent member", and a constituent member of the EPS 1 positioned on a second shaft (output shaft) 12 side of the transfer ratio variation device 7 is referred to as a "second EPS constituent member". In the embodiment, however, the second EPS constituent member is a constituent member of the EPS 1 located between the torsion bar 17B and the transfer ratio variation device 7.

In the embodiment, the first EPS constituent member includes the first shaft 11, the spiral cable device 30, the steering wheel 2, etc. In the embodiment, the second EPS constituent member includes the second shaft 12, the first and second universal joints 8 and 10, the intermediate shaft 9, the input shaft 17A of the first pinion shaft 17, etc. In the embodiment, the driver torque estimation unit 71 computes the driver torque $T_d$ based on the following formula (1). In the first embodiment, a rotational angle ratio $\theta_r/\theta_h$ of the transfer ratio variation device 7 is defined as 1.

$$T_d = T_{tb} + T_{dis1} + T_{dis2} \cdots (1)$$

$$T_{dis1} = J_{sw}\cdot d^2\theta_{sw}/dt^2 + T_{c1} + T_{ru} + T_{fr1} + T_{sc1}$$

$$T_{dis2} = J_{vd}\cdot d^2\theta_r/dt^2 + T_{c2} + T_{fr2} + T_{sc2}$$

$T_{tb}$: torsion bar torque (torsion bar torque detected by the torque sensor 42 in the embodiment)
$T_{dis1}$: compensation value for first disturbance {= -(first disturbance estimated value)} that acts on the steering wheel 2 and/or a rotary shaft (first shaft 11) between the steering wheel 2 and the transfer ratio variation device 7 because of the first EPS constituent member

$T_{dis2}$: compensation value for second disturbance {= -(second disturbance estimated value)} that acts on a rotary shaft (second shaft 12, intermediate shaft 9, and input shaft 17A) between the transfer ratio variation device 7 and the torsion bar 17B because of the second EPS constituent member

$J_{sw}$: inertial moment of the steering wheel 2 (an example of the inertial moment of the first EPS constituent member)

$\theta_{sw}$: steering wheel angle estimated value (steering wheel rotational angle)

$d^2\theta_{sw}/dt^2$: steering wheel angular acceleration estimated value (a second-order differential value of $\theta_{sw}$)

$J_{sw} \cdot d^2\theta_{sw}/dt^2$: steering wheel inertial torque compensation value {= -(steering wheel inertial torque estimated value)}

The steering wheel inertial torque estimated value ($-J_{sw} \cdot d^2\theta_{sw}/dt^2$) is an example of inertial torque based on the first EPS constituent member.

$T_{c1}$: viscous friction torque compensation value (hereinafter referred to as a "first viscous friction torque compensation value") based on the first EPS constituent member

First viscous friction torque compensation value $T_{c1}$ = -(first viscous friction torque estimated value)

$T_{ru}$: rotating unbalance torque compensation value {= -(rotating unbalance torque estimated value)}

$T_{fr1}$: Coulomb friction torque compensation value (hereinafter referred to as a "first Coulomb friction torque compensation value") based on the first EPS constituent member

First Coulomb friction torque compensation value $T_{fr1}$ = -(first Coulomb friction torque estimated value)

$T_{sc1}$: first spiral cable torque compensation value {= -(first spiral cable torque estimated value)}

The first spiral cable torque compensation value $T_{sc1}$ is a compensation value for torque generated by the spiral cable 33 discussed earlier.

$J_{vd}$: inertial moment of the second EPS constituent member

$\theta_r$: rotational angle of the second shaft 12 (an estimated value of the rotational angle of the second shaft 12)

$d^2\theta_r/dt^2$: estimated value of the angular acceleration of the second shaft 12 (a second-order differential value of $\theta_r$)

$J_{vd} \cdot d^2\theta_r/dt^2$: compensation value for inertial torque based on the second EPS constituent member {= -(estimated value of inertial torque based on the second EPS constituent member)}

$T_{c2}$: viscous friction torque compensation value (hereinafter referred to as a "second viscous friction torque compensation value") based on the second EPS constituent member

Second viscous friction torque compensation value $T_{c2}$ = -(second viscous friction torque estimated value)

$T_{fr2}$: Coulomb friction torque compensation value (hereinafter referred to as a "second Coulomb friction torque compensation value") based on the second EPS constituent member

Second Coulomb friction torque compensation value $T_{fr2}$ = -(second Coulomb friction torque estimated value)

$T_{sc2}$: second spiral cable torque compensation value {= -(second spiral cable torque estimated value)}

The second spiral cable torque compensation value $T_{sc2}$ is a compensation value for torque generated by a spiral cable (not illustrated) provided to supply electric power to the transfer ratio variation device 7. The spiral cable will be discussed in detail later.

In the embodiment, the signs of the torsion bar torque $T_{tb}$ and the driver torque $T_d$ are positive in the case of torque in the direction of steering to the left, and negative in the case of torque in the direction of steering to the right. The steering wheel angle estimated value $\theta_{sw}$, the rotational angle $\theta_r$ of the second shaft 12, and the rotational angle $\theta_p$ of the output shaft 17C of the first pinion shaft 17 represent the amount of forward/reverse rotation from the neutral position of the steering wheel. In the embodiment, the amount of rotation toward the left from the neutral position has a positive value, and the amount of rotation toward the right from the neutral position has a negative value.

The steering wheel inertial torque estimated value ($-J_{sw} \cdot d^2\theta_{sw}/dt^2$), the inertial torque estimated value ($-J_{vd} \cdot d^2\theta_r/dt^2$) based on the second EPS constituent member, the first and second viscous friction torque estimated values ($-T_{c1}, -T_{c2}$), the first and second Coulomb friction torque estimated values ($-T_{fr1}, -T_{fr2}$), and the first and second spiral cable torque estimated values ($-T_{sc1}, -T_{sc2}$) act in the direction opposite to the direction of the driver torque $T_d$. Therefore, the signs of such estimated values ($-J_{sw} \cdot d^2\theta_{sw}/dt^2$), ($-J_{vd} \cdot d^2\theta_r/dt^2$), ($-T_{c1}, -T_{c2}$), ($-T_{fr1}, -T_{fr2}$), and ($-T_{sc1}, -T_{sc2}$) are opposite to the sign of the driver torque $T_d$.

Thus, the steering wheel inertial torque compensation value $J_{sw} \cdot d^2\theta_{sw}/dt^2$, the inertial torque compensation value $J_{vd} \cdot d^2\theta_r/dt^2$ based on the second EPS constituent member, the first and second viscous friction torque compensation values $T_{c1}, T_{c2}$, the first and second Coulomb friction torque compensation values $T_{fr1}, T_{fr2}$, and the first and second spiral cable torque compensation values $T_{sc1}, T_{sc2}$ are the same as the sign of the driver torque $T_d$.

The sign of the rotating unbalance torque estimated value ($-T_{ru}$) may be the same as or opposite to the sign of the driver torque $T_d$ in terms of direction, depending on the steering wheel angle estimated value $\theta_{sw}$. Thus, the sign of the rotating unbalance torque compensation value $T_{ru}$ may be the same as or opposite to the sign of the driver torque $T_d$ in terms of direction, depending on the steering wheel angle estimated value $\theta_{sw}$.

In the embodiment, the rotational angle $\theta_r$ of the second shaft 12 is represented by the following formulas (2-1) and (2-2).

$$\theta_r = (T_{tb}/k_{tb}) + \theta_p \cdots (2\text{-}1)$$

$$\theta_p = (\theta_m/r_{wg}) \cdot (G_2/G_1) \cdots (2\text{-}2)$$

$k_{tb}$: rigidity of the torsion bar 17B
$\theta_p$: rotational angle of the output shaft 17C of the first pinion shaft 17
$\theta_m$: rotor angle of the EPS motor 23
$r_{wg}$: speed reduction ratio of the speed reducer 24
$G_1$: rack gain of the rack-and-pinion mechanism that is composed of the first pinion 21 and the first rack 22
$G_2$: rack gain of the rack-and-pinion mechanism that is composed of the second pinion 26 and the second rack 27

The "rack gain" of a rack-and-pinion mechanism is the amount of linear displacement [mm/rev] of a rack per one revolution of a pinion.

In the embodiment, the steering wheel angle estimated value $\theta_{sw}$ is represented by the following formula (3).

$$\theta_{sw} = \theta_r - \theta_{act} \cdots (3)$$

$\theta_{act}$: actual act angle
The first viscous friction torque estimated value ($-T_{c1}$) is an estimated value of viscous friction torque that acts on the first shaft 11 and the steering wheel 2 because of the first EPS constituent member. The first viscous friction torque is generated by sliding of a bearing that supports the first shaft 11, the spiral cable 33 that is connected to the steering wheel 2, etc.

The first viscous friction torque estimated value ($-T_{c1}$) is computed based on the following formula (4-1).

$$-T_{c1} = -G_{c1} \cdot d\theta_{sw}/dt \cdots (4\text{-}1)$$

$G_{c1}$: first viscous friction torque coefficient
$d\theta_{sw}/dt$: steering wheel angular speed estimated value (a first-order differential value of $\theta_{sw}$)

Thus, the first viscous friction torque compensation value $T_{c1}$ is computed based on the following formula (4-2).

$$T_{c1} = G_{c1} \cdot d\theta_{sw}/dt \cdots (4\text{-}2)$$

The first viscous friction torque coefficient $G_{c1}$ can be calculated as follows. The torsion bar torque $T_{tb}$ in a steady state is measured using the steering wheel angular speed estimated value $d\theta_{sw}/dt$ as a parameter by driving the EPS motor 23 in the hands-free state. The term "steady state" refers to a state in which the steering wheel 2 is not subjected to rotational angular acceleration, that is, a state in which the steering wheel angular acceleration estimated value $d_2\theta_{sw}/dt_2$ is 0. The rate of variation (gradient) in the torsion bar torque $T_{tb}$ with respect to the steering wheel angular speed estimated value $d\theta_{sw}/dt$ is calculated as the first viscous friction torque coefficient $G_{c1}$. In this event, in the case where the relationship between the steering wheel angular speed estimated value $d\theta_{sw}/dt$ and the torsion bar torque $T_{tb}$ is not linear, such relationship may be approximated by a desired polynomial.

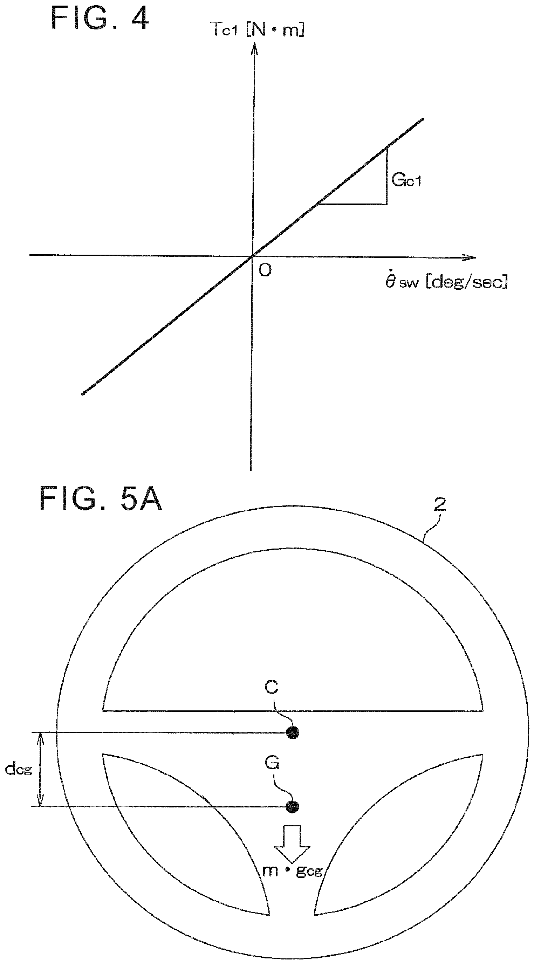

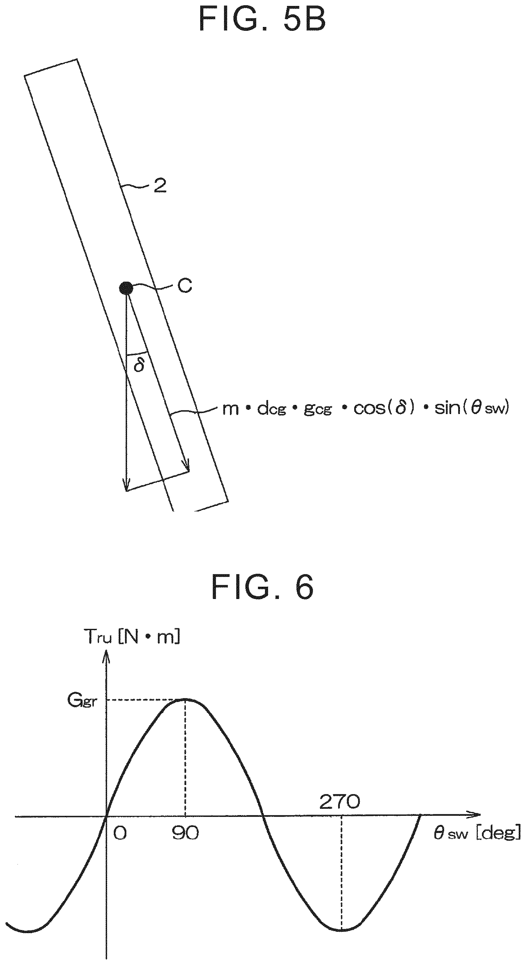

An example of the relationship between the steering wheel angular speed estimated value $d\theta_{sw}/dt$ and the first viscous friction torque compensation value $T_{c1}$ is indicated in FIG. 4. The absolute value of the first viscous friction torque compensation value $T_{c1}$ becomes larger as the absolute value of the steering wheel angular speed estimated value $d\theta_{sw}/dt$ becomes larger. The rotating unbalance torque estimated value ($-T_{ru}$) will be described. As illustrated in FIG. 5A, a position of a center of gravity G in the plane of rotation of the steering wheel 2 and a center of rotation C (the intersection point between the plane of rotation of the steering wheel 2 and the central axis of the first shaft 11) do not coincide with each other. The distance between the position of the center of gravity G in the plane of rotation of the steering wheel 2 and the position of the center of rotation C is defined as an offset distance $d_{cg}$. The mass of the steering wheel 2 is defined as m, and the gravitational acceleration is defined as $g_{cg}$. Further, as illustrated in FIG. 5B, the angle between a vertical line that passes through the position of the center of rotation C of the steering wheel 2 and the plane of rotation of the steering wheel 2 with the steering wheel 2 mounted on the vehicle is defined as a steering wheel tilt angle $\delta$.

The rotating unbalance torque estimated value ($-T_{ru}$) is an estimated value of torque applied to the first shaft 11 by a gravitational force $m \cdot g_{cg}$ that acts on the center of gravity G of the steering wheel 2. Specifically, the rotating unbalance torque estimated value ($-T_{ru}$) is computed based on the following formula (5-1).

$$-T_{ru} = -G_{gr} \cdot \sin(\theta_{sw}) \cdots (5\text{-}1)$$

$G_{gr}$ is a gravitational force torque coefficient, and is a value that matches the product $m \cdot g_{cg} \cdot d_{cg} \cdot \cos(\delta)$ of the mass m of the steering wheel 2, the gravitational force acceleration $g_{cg}$, the offset distance $d_{cg}$, and the cosine value $\cos(\delta)$ of the steering wheel tilt angle $\delta$. $\sin(\theta_{sw})$ is the sine value of the steering wheel angle estimated value $\theta_{sw}$.

Thus, the rotating unbalance torque compen-

sation value $T_{ru}$ is computed based on the following formula (5-2).

$$T_{ru} = G_{gr} \cdot \sin(\theta_{sw}) \cdots (5\text{-}2)$$

In the case where the offset distance $d_{cg}$, the mass m of the steering wheel 2, and the steering wheel tilt angle $\delta$ are known, the gravitational force torque coefficient $G_{gr}$ can be calculated based on the formula $G_{gr}$ = $m \cdot d_{cg} \cdot g_{cg} \cdot \cos(\delta)$.

The gravitational force torque coefficient $G_{gr}$ can also be calculated as follows. That is, the torsion bar torque $T_{tb}$ in the steady state is measured using the steering wheel angle estimated value $\theta_{sw}$ as a parameter in the hands-free state. The absolute value of the torsion bar torque $T_{tb}$ at the time when the steering wheel angle estimated value $\theta_{sw}$ is 90 degrees is calculated as the gravitational force torque coefficient $G_{gr}$. An example of the relationship between the steering wheel angle estimated value $\theta_{sw}$ and the rotating unbalance torque compensation value $T_{ru}$ is indicated in FIG. 6. Since the gravitational force $m \cdot g_{cg}$ that acts on the center of gravity of the steering wheel 2 is a force in the vertical direction, the absolute value of the rotating unbalance torque compensation value $T_{ru}$ becomes maximum when the steering wheel angle estimated value $\theta_{sw}$ is $\pm 90$ [deg] and $\pm 270$ [deg], and also becomes maximum at angular positions shifted from such positions by every $\pm 180$ [deg]. The first Coulomb friction torque estimated value $(-T_{fr1})$ is an estimated value of Coulomb friction torque that acts on the first shaft 11 and the steering wheel 2 because of the first EPS constituent member. The first Coulomb friction torque is generated by a bearing that supports the first shaft 11, the spiral cable 33 that is connected to the steering wheel 2, etc.

The first Coulomb friction torque estimated value $(-T_{fr1})$ is computed based on the following formula (6-1).

$$(-T_{fr1}) = -G_{f1} \cdot \tanh(\eta_1 \cdot d\theta_{sw}/dt) \cdots (6\text{-}1)$$

$G_{f1}$: first Coulomb friction torque coefficient
$\eta_1$: first Coulomb friction torque variation gradient

Thus, the first Coulomb friction torque compensation value $T_{fr1}$ is computed based on the following formula (6-2).

$$T_{fr1} = G_{f1} \cdot \tanh(\eta_1 \cdot d\theta_{sw}/dt) \cdots (6\text{-}2)$$

The first Coulomb friction torque coefficient $G_{fr1}$ can be calculated as follows. The motor torque that is applied to the second shaft 12 by the EPS motor 23 is gradually increased in the hands-free state, and the absolute value of the torsion bar torque $T_{tb}$ at the time when the absolute value of the steering wheel angular speed estimated val-

ue $d\theta_{sw}/dt$ becomes more than zero, that is, at the time when the steering wheel 2 starts moving, is calculated as the first Coulomb friction torque coefficient $G_{f1}$. The first Coulomb friction torque variation gradient $\eta_1$ is determined by tuning.

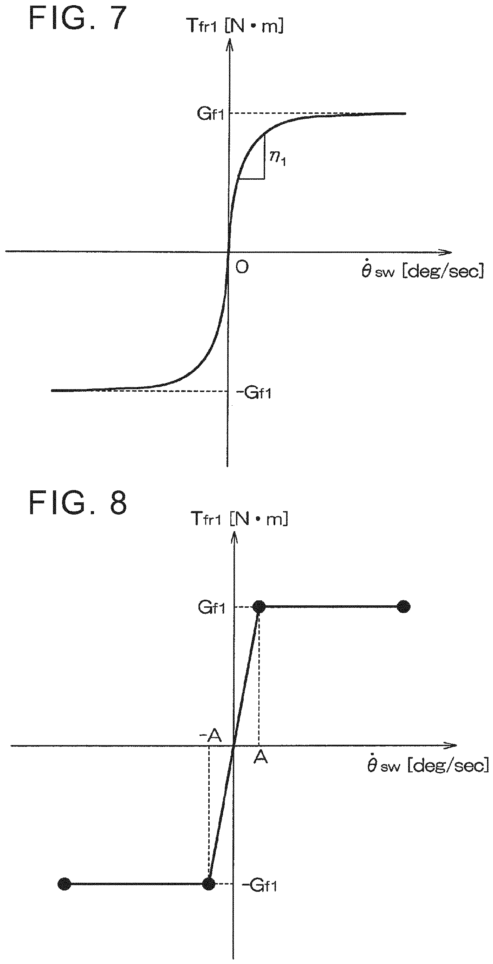

An example of the relationship between the steering wheel angular speed estimated value $d\theta_{sw}/dt$ and the first Coulomb friction torque compensation value $T_{fr1}$ is indicated in FIG. 7. When the absolute value of the steering wheel angular speed estimated value $d\theta_{sw}/dt$ becomes larger from 0, the absolute value of the first Coulomb friction torque compensation value $T_{f1}$ becomes larger at a relatively high variation rate in the range in which the absolute value of the steering wheel angular speed estimated value $d\theta_{sw}/dt$ is small, and thereafter converges to the magnitude of the first Coulomb friction torque coefficient $G_{f1}$. The rate of variation in the first Coulomb friction torque compensation value $T_{fr1}$ with respect to the steering wheel angular speed estimated value $d\theta_{sw}/dt$ in the range in which the absolute value of the steering wheel angular speed estimated value $d\theta_{sw}/dt$ is small becomes higher as the first Coulomb friction torque variation gradient $\eta_1$ becomes larger.

A map that represents the relationship between the steering wheel angular speed estimated value $d\theta_{sw}/dt$ and the first Coulomb friction torque compensation value $T_{fr1}$ may be prepared in advance, and the first Coulomb friction torque compensation value $T_{f1}$ may be computed based on the map. In this case, the relationship between the steering wheel angular speed estimated value $d\theta_{sw}/dt$ and the first Coulomb friction torque compensation value $T_{fr1}$ may be as indicated in FIG. 8. In this example, the first Coulomb friction torque compensation value $T_{fr1}$ has a value of $-G_{f1}$ in the range in which the steering wheel angular speed estimated value $d\theta_{sw}/dt$ is equal to or less than -A. The first Coulomb friction torque compensation value $T_{fr1}$ has a value of $+G_{f1}$ in the range in which the steering wheel angular speed estimated value $d\theta_{sw}/dt$ is equal to or more than +A. In the range in which the steering wheel angular speed estimated value $d\theta_{sw}/dt$ is between -A and +A, the first Coulomb friction torque compensation value $T_{fr1}$ is varied linearly from $-G_{f1}$ to $+G_{f1}$ as the steering wheel angular speed estimated value $d\theta_{sw}/dt$ becomes larger. The first spiral cable torque estimated value $(-T_{sc1})$ is torque that acts on the steering wheel 2 because of the spring characteristics of the spiral cable 33.

The first spiral cable torque estimated value $(-T_{sc1})$ is computed based on the following formula (7-1).

$$(-T_{sc1}) = -k_{sc1} \cdot \theta_{sw} \cdots (7\text{-}1)$$

$k_{sc1}$: spring constant of the spiral cable 33
Thus, the first spiral cable torque compensation value $T_{sc1}$ is computed based on the following formula (7-2).

$$T_{sc1} = k_{sc1} \cdot \theta_{sw} \cdots (7\text{-}2)$$

The second viscous friction torque estimated value ($-T_{c2}$) is an estimated value of viscous friction torque that acts on the second shaft 12, the intermediate shaft 9, and the input shaft 17A because of the second EPS constituent member. The second viscous friction torque is generated by sliding of a bearing that supports the second shaft 12, the intermediate shaft 9, and the input shaft 17A, etc.

The second viscous friction torque estimated value ($-T_{c2}$) is computed based on the following formula (8-1).

$$-T_{c2} = -G_{c2} \cdot d\theta_r/dt \cdots (8\text{-}1)$$

$G_{c2}$: second viscous friction torque coefficient
$d\theta_r/dt$: estimated value of the angular speed of the second shaft 12 (a first-order differential value of $\theta_r$)
Thus, the second viscous friction torque compensation value $T_{c2}$ is computed based on the following formula (8-2).

$$T_{c2} = G_{c2} \cdot d\theta_r/dt \cdots (8\text{-}2)$$

The second viscous friction torque coefficient $G_{c2}$ is calculated through an experiment etc.

The second Coulomb friction torque estimated value ($-T_{fr2}$) is an estimated value of Coulomb friction torque that acts on the second shaft 12, the intermediate shaft 9, and the input shaft 17A because of the second EPS constituent member. The second Coulomb friction torque is generated by a bearing that supports the second shaft 12, the intermediate shaft 9, and the input shaft 17A, etc.

The second Coulomb friction torque estimated value ($-T_{fr2}$) is computed based on the following formula (9-1).

$$(-T_{fr2}) = -G_{f2} \cdot \tanh(\eta_2 \cdot d\theta_r/dt) \cdots (9\text{-}1)$$

$G_{f2}$: second Coulomb friction torque coefficient
$\eta_2$: second Coulomb friction torque variation gradient
Thus, the second Coulomb friction torque compensation value $T_{fr2}$ is computed based on the following formula (9-2).

$$T_{fr2} = G_{f2} \cdot \tanh(\eta_2 \cdot d\theta_r/dt) \cdots (9\text{-}2)$$

The second Coulomb friction torque coefficient $G_{fr2}$ and the second Coulomb friction torque variation gradient $\eta_2$ are calculated through an experiment etc. The transfer ratio variation device 7 is disposed between the first shaft 11 and the second shaft 12. The first shaft 11 is mechanically coupled to one of the rotor (not illustrated) of the electric motor 15 and a stator (not illustrated) thereof fixed to a housing via a gear etc., while the second shaft 12 is mechanically coupled to the other via a gear etc. The transfer ratio variation device 7 varies the rotational angle ratio between the first shaft 11 and the second shaft 12 through rotation of the electric motor 15.

One end of a power feed cable (not illustrated) for supplying electric power to the electric motor 15 is connected to a device fixed to the vehicle such as the ECU 50, while the other end thereof is connected to the transfer ratio variation device 7. Thus, the power feed cable for the electric motor 15 is rotated on the side of the transfer ratio variation device 7, and not rotated on the side of the vehicle, along with rotation of the first shaft 11, the second shaft 12, and the electric motor 15. Therefore, a spiral cable (spiral cable for the transfer ratio variation device 7) is used as the power feed cable for the electric motor 15, and an error is caused in the estimated value of the driver torque by torque of the spiral cable. Thus, in the first embodiment (and also in a second embodiment to be discussed later), torque of the spiral cable for the transfer ratio variation device 7 is compensated for.

In the embodiment, the second spiral cable torque estimated value ($-T_{sc2}$) is torque that acts on the second shaft 12, the intermediate shaft 9, and the input shaft 17A because of the spring characteristics of the spiral cable for the transfer ratio variation device 7. The second spiral cable torque estimated value ($-T_{sc2}$) is computed based on the following formula (10-1).

$$(-T_{sc2}) = -k_{sc2} \cdot \theta_r \cdots (10\text{-}1)$$

$k_{sc2}$: spring constant of the spiral cable for the transfer ratio variation device 7
Thus, the second spiral cable torque compensation value $T_{sc2}$ is computed based on the following formula (10-2).

$$T_{sc2} = k_{sc2} \cdot \theta_r \cdots (10\text{-}2)$$

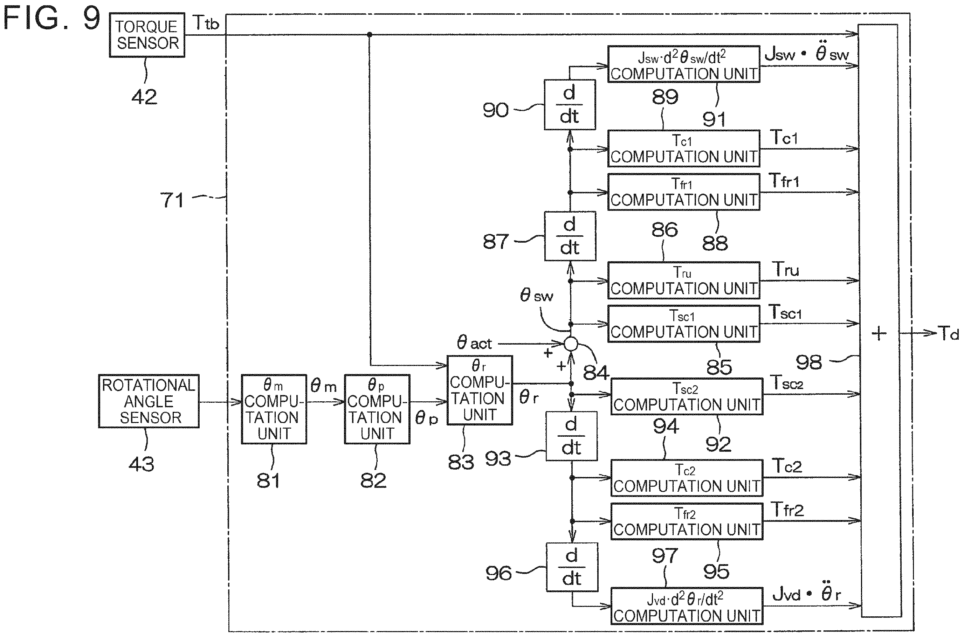

FIG. 9 is a block diagram illustrating the configuration of the driver torque estimation unit 71.

The driver torque estimation unit 71 includes a $\theta_m$ computation unit 81, a $\theta_p$ computation unit 82, a $\theta_r$ computation unit 83, a first addition unit 84, a $T_{sc1}$ computation unit 85, a $T_{ru}$ computation unit 86, a first differential computation unit 87, a $T_{fr1}$ computation unit 88, a $T_{c1}$ computation unit 89, a second differential computation unit 90, a $J_{sw} \cdot d^2\theta_{sw}/dt^2$ computation unit 91, a $T_{sc2}$ computation unit 92, a third differential computation unit 93, a $T_{c2}$ computation unit 94, a $T_{fr2}$ computation unit 95, a fourth differential computation unit 96, a $J_{vd} \cdot d^2\theta_r/dt^2$

computation unit 97, and a second addition unit 98.

The $\theta_m$ computation unit 81 computes the rotational angle (rotor rotational angle) $\theta_m$ of the EPS motor 23 based on the output signal from the rotational angle sensor 43. The $\theta_p$ computation unit 82 computes the rotational angle $\theta_p$ of the output shaft 17C of the first pinion shaft 17 based on the formula (2-2). The $\theta_r$ computation unit 83 computes the rotational angle $\theta_r$ of the second shaft 12 based on the formula (2-1) using the torsion bar torque $T_{tb}$ and the rotational angle $\theta_p$.

The first addition unit 84 computes the steering wheel angle estimated value $\theta_{sw}$ by adding the actual act angle $\theta_{act}$ to the rotational angle $\theta_r$ of the second shaft 12. The $T_{sc1}$ computation unit 85 computes the first spiral cable torque compensation value $T_{sc1}$ based on the formula (7-2) using the steering wheel angle estimated value $\theta_{sw}$ that is computed by the first addition unit 84.

The $T_{ru}$ computation unit 86 computes the rotating unbalance torque compensation value $T_{ru}$ based on the formula (5-2) using the steering wheel angle estimated value $\theta_{sw}$ that is computed by the first addition unit 84. The first differential computation unit 87 computes the steering wheel angular speed estimated value $d\theta_{sw}/dt$ by differentiating the steering wheel angle estimated value $\theta_{sw}$, which is computed by the first addition unit 84, with respect to time. The $T_{fr1}$ computation unit 88 computes the first Coulomb friction torque compensation value $T_{fr1}$ based on the formula (6-2) using the steering wheel angular speed estimated value $d\theta_{sw}/dt$ that is computed by the first differential computation unit 87.

The $T_{c1}$ computation unit 89 computes the first viscous friction torque compensation value $T_{c1}$ based on the formula (4-2) using the steering wheel angular speed estimated value $d\theta_{sw}/dt$ that is computed by the first differential computation unit 87. The second differential computation unit 90 computes the steering wheel angular acceleration estimated value $d^2\theta_{sw}/dt_2$ by differentiating the steering wheel angular speed estimated value $d\theta_{sw}/dt$, which is computed by the first differential computation unit 87, with respect to time.

The $J_{sw} \cdot d^2\theta_{sw}/dt^2$ computation unit 91 computes the steering wheel inertial torque compensation value $J_{sw} \cdot d^2\theta_{sw}/dt^2$ using the steering wheel angular acceleration estimated value $d^2\theta_{sw}/dt_2$ that is computed by the second differential computation unit 90. The $T_{sc2}$ computation unit 92 computes the second spiral cable torque compensation value $T_{sc2}$ based on the formula (10-2) using the rotational angle $\theta_r$ of the second shaft 12 that is computed by the $\theta_r$ computation unit 83.

The third differential computation unit 93 computes the angular speed estimated value $d\theta_r/dt$ of the second shaft 12 by differentiating the rotational angle $\theta_r$ of the second shaft 12, which is computed by the $\theta_r$ computation unit 83, with respect to time. The $T_{c2}$ computation unit 94 computes the second viscous friction torque compensation value $T_{c2}$ based on the formula (8-2) using the angular speed estimated value $d\theta_r/dt$ of the second shaft 12 that is computed by the third differential computation unit 93.

The $T_{fr2}$ computation unit 95 computes the second Coulomb friction torque compensation value $T_{fr2}$ based on the formula (9-2) using the angular speed estimated value $d\theta_r/dt$ of the second shaft 12 that is computed by the third differential computation unit 93. The fourth differential computation unit 96 computes the angular acceleration estimated value $d^2\theta_r/dt^2$ of the second shaft 12 by differentiating the angular speed estimated value $d\theta_r/dt$ of the second shaft 12, which is computed by the third differential computation unit 93, with respect to time.

The $J_{vd} \cdot d^2\theta_r/dt^2$ computation unit 97 computes the inertial torque compensation value $J_{vd} \cdot d^2\theta_r/dt^2$ based on the second EPS constituent member using the angular acceleration estimated value $d^2\theta_r/dt^2$ of the second shaft 12 that is computed by the fourth differential computation unit 96. The second addition unit 98 computes the driver torque (estimated value) $T_d$ by adding, to the torsion bar torque $T_{tb}$ that is detected by the torque sensor 42, $T_{sc1}$, $T_{ru}$, $T_{fr1}$, $T_{c1}$, $J_{sw} \cdot d^2\theta_{sw}/dt^2$, $T_{sc2}$, $T_{c2}$, $T_{fr2}$, and $J_{vd} \cdot d^2\theta_r/dt^2$ that are computed by the $T_{sc1}$ computation unit 85, the $T_{ru}$ computation unit 86, the $T_{fr1}$ computation unit 88, the $T_{c1}$ computation unit 89, the $J_{sw} \cdot d^2\theta_{sw}/dt^2$ computation unit 91, the $T_{sc2}$ computation unit 92, the $T_{c2}$ computation unit 94, the $T_{fr2}$ computation unit 95, and the $J_{vd} \cdot d^2\theta_r/dt^2$ computation unit 97, respectively.

In the embodiment, the driver torque $T_d$ is computed in consideration of not only the torsion bar torque $T_{tb}$ but also the estimated value ($-T_{dis1}$) of the first disturbance, that acts on the steering wheel 2 and/or a rotary shaft (first shaft 11) between the steering wheel 2 and the transfer ratio variation device 7 because of the first EPS constituent member, and the estimated value ($-T_{dis2}$) of the second disturbance, which acts on a rotary shaft (second shaft 12, intermediate shaft 9, and input shaft 17A) between the transfer ratio variation device 7 and the torsion bar 17B because of the second EPS constituent member. Thus, the driver torque can be estimated precisely.

Returning to FIG. 3, the low-pass filter 72 attenuates a frequency component of the driver torque $T_d$, which is computed by the driver torque estimation unit 71, that is higher than a predetermined cut-off frequency fc. The cut-off frequency fc is set to a value within the range of 3 [Hz] or more and 7 [Hz] or less, for example. In the embodiment, the low-pass filter 72 is a second-order Butterworth filter. The driver torque $T_d'$ after being subjected to the low-pass filter process by the low-pass filter 72 is provided to the hands-on/off determination unit 73.

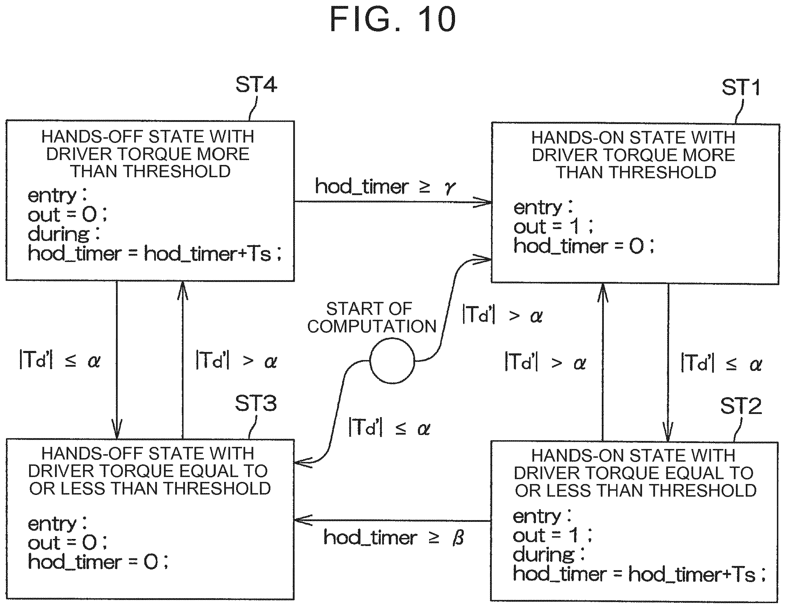

FIG. 10 illustrates state transition for explaining operation of the hands-on/off determination unit 73. In the description of operation of the hands-on/off determination unit 73, the driver torque $T_d$ after being subjected to the low-pass filter process by the low-pass filter 72 is referred to simply as "driver torque $T_d'$". The hands-on/off determination unit 73 distinguishes four states, namely a "hands-on state (ST1) with the driver torque more than a threshold", a "hands-on state (ST2) with the driver torque equal to or less than the threshold", a "hands-off state (ST3) with the driver torque equal to or less than the threshold", and a "hands-off state (ST4) with the driver torque more than the threshold", as the state of a steering wheel operation by the driver. The hands-on/off determination unit 73 distinguishes the four states every predetermined time T [sec].

In the "hands-on state (ST1) with the driver torque more than the threshold", the absolute value of the driver torque $T_d{}'$ is more than a predetermined threshold $\alpha$ (> 0). In the "hands-on state (ST2) with the driver torque equal to or less than the threshold", the absolute value of the driver torque $T_d{}'$ is equal to or less than the threshold $\alpha$. In the "hands-off state (ST3) with the driver torque equal to or less than the threshold", the absolute value of the driver torque $T_d{}'$ is equal to or less than the threshold $\alpha$. In the "hands-off state (ST4) with the driver torque more than the threshold", the absolute value of the driver torque $T_d{}'$ is more than the threshold $\alpha$. The threshold $\alpha$ is set to a value within the range of 0.1 [Nm] or more and 0.3 [Nm] or less, for example.

When it is unknown which of the four states is established and the absolute value of the driver torque $T_d{}'$ is more than the threshold $\alpha$ at the time of start of determination, the hands-on/off determination unit 73 determines that the steering wheel operation state is the "hands-on state (ST1) with the driver torque more than the threshold". The hands-on/off determination unit 73 sets the output signal (out) to "1", and sets a time counter value hod_timer to 0. The output signal (out) is a signal that represents the determination result. When the output signal (out) is "1", the determination result is hands-on. When the output signal (out) is "0", the determination result is hands-off.

When the absolute value of the driver torque $T_d{}'$ becomes equal to or less than the threshold $\alpha$ in the "hands-on state (ST1) with the driver torque more than the threshold", the hands-on/off determination unit 73 determines that the steering wheel operation state has become the "hands-on state (ST2) with the driver torque equal to or less than the threshold". The hands-on/off determination unit 73 sets the output signal (out) to "1". In the case where the "hands-on state (ST2) with the driver torque equal to or less than the threshold" is determined, the hands-on/off determination unit 73 updates the time counter value hod_timer to a value obtained by adding a predetermined value Ts to the current value (hod_timer) each time the predetermined time T [sec] elapses.

When the absolute value of the driver torque $T_d{}'$ becomes more than the threshold $\alpha$ before the time counter value hod_timer reaches a predetermined hands-off determination threshold $\beta$ (> 0) in the "hands-on state (ST2) with the driver torque equal to or less than the threshold", the hands-on/off determination unit 73 determines that the steering wheel operation state has become the "hands-on state (ST1) with the driver torque more than the threshold", and sets the time counter value hod_timer to 0.

When the time counter value hod_timer reaches the hands-off determination threshold $\beta$ without the absolute value of the driver torque $T_d{}'$ becoming more than the threshold $\alpha$ in the "hands-on state (ST2) with the driver torque equal to or less than the threshold", the hands-on/off determination unit 73 determines that the steering wheel operation state has become the "hands-off state (ST3) with the driver torque equal to or less than the threshold". The hands-on/off determination unit 73 sets the output signal (out) to "0", and sets the time counter value hod_timer to 0. The hands-off determination threshold $\beta$ is set to a value within the range of 0.5 [sec] or more and 1.0 [sec] or less, for example.

When the absolute value of the driver torque $T_d{}'$ becomes more than the threshold $\alpha$ in the "hands-off state (ST3) with the driver torque equal to or less than the threshold", the hands-on/off determination unit 73 determines that the steering wheel operation state has become the "hands-off state (ST4) with the driver torque more than the threshold". The hands-on/off determination unit 73 sets the output signal (out) to "0". In the case where the "hands-off state (ST4) with the driver torque more than the threshold" is determined, the hands-on/off determination unit 73 updates the time counter value hod_timer to a value obtained by adding the predetermined value Ts to the current value (hod timer) each time the predetermined time T [sec] elapses.

When the absolute value of the driver torque $T_d{}'$ becomes equal to or less than the threshold $\alpha$ before the time counter value hod_timer reaches a predetermined hands-on determination threshold $\gamma$ (> 0) in the "hands-off state (ST4) with the driver torque more than the threshold", the hands-on/off determination unit 73 determines that the steering wheel operation state has become the "hands-off state (ST3) with the driver torque equal to or less than the threshold", and sets the time counter value hod_timer to 0. The hands-on determination threshold $\gamma$ is set to a value within the range of 0.05 [sec] or more and 0.1 [sec] or less, for example.

When the time counter value hod_timer reaches the hands-on determination threshold $\gamma$ without the absolute value of the driver torque $T_d{}'$ becoming equal to or less than the threshold $\alpha$ in the "hands-off state (ST4) with the driver torque more than the threshold", the hands-on/off determination unit 73 determines that the steering wheel operation state has become the "hands-on state (ST1) with the driver torque more than the threshold". The hands-on/off determination unit 73 sets the output signal (out) to "1", and sets the time counter value hod timer to 0.

When the absolute value of the driver torque $T_d{}'$ is equal to or less than the threshold $\alpha$ at the time of start of determination, the hands-on/off determination unit 73 determines that the steering wheel operation state is the "hands-off state (ST3) with the driver torque equal to or less than the threshold". The hands-on/off determination unit 73 sets the output signal (out) to "0", and sets the time counter value hod_timer to 0. In the embodiment, the driver torque $T_d$ is estimated precisely by the driver torque estimation unit 71. A high-frequency component of the estimated driver torque $T_d$ is removed. A hands-on/off determination is made using the torque threshold $\alpha$ and the time counter value hod_timer based on the driver torque $T_d$' after removal of the high-frequency component. Therefore, it is possible to precisely determine whether a hands-on state in which the driver is grasping the steering wheel is established or a hands-off state in which the driver is not grasping the steering wheel is established.

The hands-on/off determination result can be utilized for mode switching control in a vehicle that has an automatic operation mode and a manual operation mode as operation modes, such as switching to the manual operation mode after confirming that the hands-on state has been established when switching is made from the automatic operation mode to the manual operation mode, for example.

Next, a second embodiment will be described. In the first embodiment discussed earlier, the rotational angle ratio $\theta_r/\theta_h$ of the transfer ratio variation device 7 is 1. In the second embodiment, the rotational angle ratio $\theta_r/\theta_h$ of the transfer ratio variation device 7 may be a value other than 1.

The inertial torque estimated value $(-J_{vd} \cdot d^2\theta_r/dt^2)$ based on the second EPS constituent member, the second viscous friction torque estimated value $(-T_{c2})$, the second Coulomb friction torque estimated value $(-T_{fr2})$, and the second spiral cable torque estimated value $(-T_{sc2})$ discussed earlier are estimated values of torque that acts on the second shaft 12, the intermediate shaft 9, and the input shaft 17A. The torsion bar torque $T_{tb}$ is torque applied to the input shaft 17A.

In the case where the rotational angle ratio $\theta_r/\theta_h$ of the transfer ratio variation device 7 is 1, torque that acts on the second shaft 12, the intermediate shaft 9, and the input shaft 17A is equal to torque that acts on the steering wheel 2 (first shaft 11). In the case where the rotational angle ratio $\theta_r/\theta_h$ of the transfer ratio variation device 7 is a value other than 1, however, the two torques are not equal to each other. Thus, in order to estimate accurate driver torque in the case where the rotational angle ratio $\theta_r/\theta_h$ of the transfer ratio variation device 7 is a value other than 1, it is necessary to convert torque (torque estimated values) that acts on the second shaft 12, the intermediate shaft 9, and the input shaft 17A into torque (torque estimated value) that acts on the steering wheel 2 (first shaft 11) by being multiplied by a rotational angle ratio $G_{rot}$ $(= \theta_r/\theta_h)$. It is necessary to calculate a torque compensation value and torsion bar torque applied to the steering wheel 2 from the torque (torque estimated value) after the conversion.

Thus, in the second embodiment, the driver torque estimation unit 71 (see FIG. 3) computes the driver torque $T_d$ using the following formula (11) in place of the formula (1) discussed earlier.

$$T_d = T_{dis1} + G_{rot} \cdot (T_{tb} + T_{dis2}) \cdots (11)$$

$$G_{rot} = \theta_r/\theta_h$$

$G_{rot}$ is the rotational angle ratio $\theta_r/\theta_h$ of the transfer ratio variation device 7. $T_{dis1}$, $T_{tb}$, and $T_{dis2}$ are the same as the first disturbance compensation value $T_{dis1}$, the torsion bar torque $T_{tb}$, and the second disturbance compensation value $T_{dis2}$, respectively, according to the first embodiment discussed earlier, and therefore description thereof is omitted.

Normally, the rotational angle ratio $G_{rot}$ is a value that is close to 1. Therefore, the driver torque $T_d$ may be computed by a method that is similar to that according to the first embodiment even in the case where the rotational angle ratio $G_{rot}$ is a value other than 1. In that way, however, an error may be caused in the result of computing the driver torque $T_d$ in the case where the rotational angle ratio $G_{rot}$ is significantly far from 1.

In the second embodiment, a fact that the magnitude of the second disturbance as seen from the steering wheel side is increased and decreased in accordance with the rotational angle ratio $G_{rot}$ can be taken into consideration, improving the precision in computing the driver torque $T_d$. The rotational angle ratio $G_{rot}$ is set by the ECU 50 that controls the transfer ratio variation device 7, and thus the driver torque estimation unit 71 (see FIG. 3) can acquire the rotational angle ratio $G_{rot}$ from the ECU 50. The rotational angle ratio $G_{rot}$ may be computed from detection values of the steered angle sensor 41 and the rotational angle sensor 16.

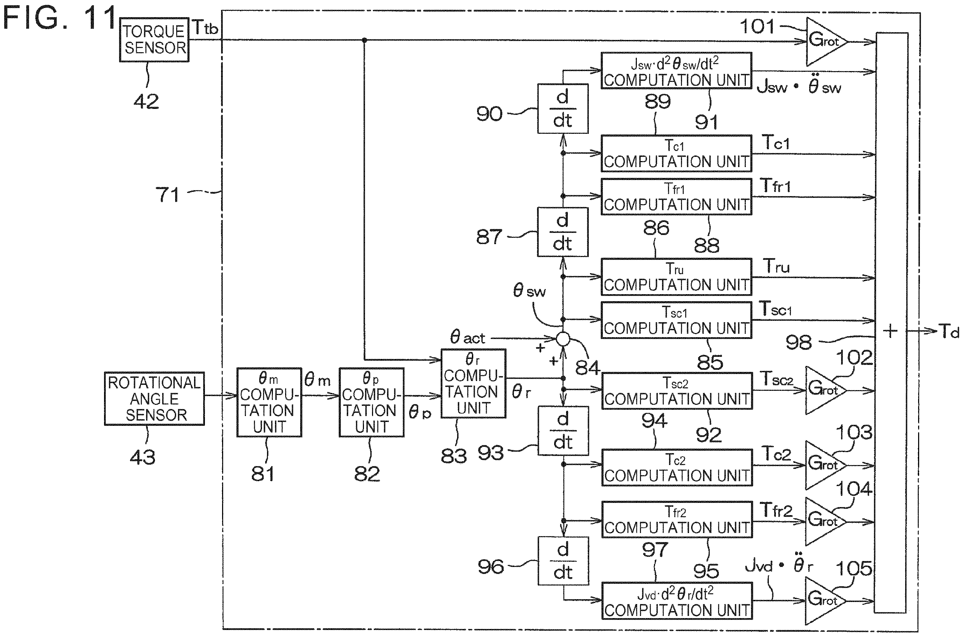

FIG. 11 is a block diagram illustrating a specific example of the configuration of the driver torque estimation unit 71 according to the second embodiment. In FIG. 11, components corresponding to the components in FIG. 9 discussed earlier are given the same reference numerals as in FIG. 9 to omit description thereof. A first difference from FIG. 9 is that there is provided a rotational angle ratio multiplication unit 101 that multiplies the torsion bar torque $T_{tb}$, which is detected by the torque sensor 42, by the rotational angle ratio $G_{rot}$. A second difference from FIG. 9 is that rotational angle ratio multiplication units 102, 103, 104, and 105 that multiply $T_{sc2}$, $T_{c2}$, $T_{fr2}$, and $J_{vd} \cdot d^2\theta_r/dt^2$ by the rotational angle ratio $G_{rot}$ are provided subsequent to the $T_{sc2}$ computation unit 92, the $T_{c2}$ computation unit 94, the $T_{fr2}$ computation unit 95, and the $J_{vd} \cdot d^2\theta_r/dt^2$ computation unit 97, respectively.

That is, the driver torque estimation unit 71 in FIG. 11 is different from that in FIG. 9 in that a value obtained by multiplying the torsion bar torque $T_{tb}$ by the rotational angle ratio $G_{rot}$, rather than the torsion bar torque $T_{tb}$ itself, is provided to the second addition unit 98. In addition, the driver torque estimation unit 71 in FIG. 11 is different from that in FIG. 9 in that values obtained by multiplying the compensation values $T_{sc2}$, $T_{c2}$, $T_{fr2}$, and $J_{vd} \cdot d^2\theta_r/dt^2$ for disturbance due to the second EPS constituent member by the rotational angle ratio $G_{rot}$, rather than the compensation values $T_{sc2}$, $T_{c2}$, $T_{fr2}$, and $J_{vd} \cdot d^2\theta_r/dt^2$ themselves, arc provided to the second addition unit 98.

While embodiments of the present invention have been described above, the present invention may be implemented in other embodiments. For example, in the embodiments discussed earlier, the first disturbance compensation value $T_{dis1}$ includes the steering wheel inertial torque compensation value $J_{sw} \cdot d^2\theta_{sw}/dt^2$, the first viscous friction torque compensation value $T_{c1}$, the rotating unbalance torque compensation value $T_{ru}$, the first Coulomb friction torque compensation value $T_{fr1}$, and the first spiral cable torque compensation value $T_{sc1}$. However, the first disturbance compensation value $T_{dis1}$ may include at least one of the steering wheel inertial torque compensation value $J_{sw} \cdot d^2\theta_{sw}/dt^2$, the first viscous friction torque compensation value $T_{c1}$, the rotating unbalance torque compensation value $T_{ru}$, the first Coulomb friction torque compensation value $T_{fr1}$, and the first spiral cable torque compensation value $T_{sc1}$.

In the embodiments discussed earlier, the second disturbance compensation value $T_{dis2}$ includes the inertial torque compensation value $J_{vd} \cdot d^2\theta_r/dt^2$ based on the second EPS constituent member, the second viscous friction torque compensation value $T_{c2}$, the second Coulomb friction torque compensation value $T_{fr2}$, and the second spiral cable torque compensation value $T_{sc2}$. However, the second disturbance compensation value $T_{dis2}$ may include at least one of the inertial torque compensation value $J_{vd} \cdot d^2\theta_r/dt^2$ based on the second EPS constituent member, the second viscous friction torque compensation value $T_{c2}$, the second Coulomb friction torque compensation value $T_{fr2}$, and the second spiral cable torque compensation value $T_{sc2}$.

In the embodiments discussed earlier, the rotational angle $\theta_r$ of the second shaft 12 is computed based on the torsion bar torque $T_{tb}$ and the rotational angle $\theta_p$ of the output shaft 17C of the first pinion shaft 17, and the steering wheel angle estimated value $\theta_{sw}$ is computed based on the rotational angle $\theta_r$ of the second shaft 12 and the actual act angle $\theta_{act}$. However, the rotational angle $\theta_h$ of the first shaft 11 that is detected by the steered angle sensor 41 may be used as the steering wheel angle estimated value $\theta_{sw}$.

In the embodiments discussed earlier, the low-pass filter 72 in the steering wheel operation state determination unit 63 (see FIG. 3) is provided subsequent to the driver torque estimation unit 71. However, the low-pass filter 72 may be provided prior to the driver torque estimation unit 71. Alternatively, the low-pass filter 72 may be omitted. In the embodiments discussed earlier, the VGR motor 15 and the EPS motor 23 are each a three-phase brushless motor. However, such motors 15 and 23 may each be a brushed direct-current (DC) motor.

In the embodiments discussed earlier, the present invention is applied to a dual pinion-type EPS. However, the present invention is also applicable to EPSs other than the column assist-type EPS such as a rack assist-type EPS. Besides, a variety of design changes may be made to the present invention without departing from the scope described in the claims.

**Claims**

1. A driver torque estimation device comprising:

   a transfer ratio variation device (7) and a torsion bar (17B) provided on a torque transfer path between a steering wheel (2) and a steering mechanism (4);
   an electric motor (23) configured to apply a steering assist force to the steering mechanism (4);
   a torque sensor (42) that acquires torsion bar torque applied to the torsion bar;
   an input shaft rotational angle acquisition unit configured to acquire a rotational angle of an input shaft (11) of the transfer ratio variation device (7);and
   an electronic control unit (50) configured to acquire a rotational angle of an output shaft (12) of the transfer ratio variation device (7), the driver torque estimation device being **characterized by**
   the electronic control unit (50) being configured to compute an estimated value of first disturbance due to a first electric power steering constituent member, which is positioned on an input shaft side of the transfer ratio variation device (7), using the rotational angle of the input shaft (11), the first disturbance acting on at least one of the steering wheel (2) and the input shaft (11) between the steering wheel (2) and the transfer ratio variation device (7);
   the electronic control unit (50) is configured to compute an estimated value of second disturbance due to a second electric power steering constituent member, which is positioned on an output shaft side of the transfer ratio variation device (7), using the rotational angle of the output shaft (12), the second disturbance acting on a rotary shaft between the transfer ratio variation device (7) and the torsion bar (17b); and
   the electronic control unit (50) is configured to compute an estimated value of driver torque based on the torsion bar torque, the estimated value of the first disturbance, and the estimated value of the second disturbance.

2. The driver torque estimation device according to claim 1, wherein the electronic control unit (50) is configured to estimate at least one of inertial torque based on the first electric power steering constituent member, viscous friction torque, coulomb friction torque, rotating unbalance torque, and spiral cable torque.

3. The driver torque estimation device according to claim 1, wherein the electronic control unit (50) is configured to estimate at least one of inertial torque based on the second electric power steering constituent member, viscous friction torque, coulomb friction torque, and spiral cable torque.

4. The driver torque estimation device according to any one of claims 1 to 3, wherein the electronic control unit (50) is configured to acquire the rotational angle of the output shaft (12) using a rotational angle of the electric motor (23) and the torsion bar torque.

5. The driver torque estimation device according to any one of claims 1 to 3, wherein the electronic control unit (50) is configured to acquire the rotational angle of the input shaft (11) using a rotational angle of the electric motor (23), the torsion bar torque, and a rotational angle difference between the input shaft (11) and the output shaft (12).

6. The driver torque estimation device according to any one of claims 1 to 4, **characterized by** further comprising a rotational angle sensor (43) configured to detect a rotational angle of the steering wheel (2), wherein

the electronic control unit (50) is configured to acquire the rotational angle of the input shaft (11) based on an output signal from the rotational angle sensor (43).

7. An electric power steering system (1) including the driver torque estimation device according to any one of claims 1 to 6, wherein

the electronic control unit (50) is configured to determine, based on the estimated value of the driver torque that has been computed, whether a hands-on state is established or a hands-off state is established.

## Patentansprüche

1. Fahrermoment-Schätzvorrichtung mit:

einer Übertragungsverhältnis-Variationsvorrichtung (7) und einen Torsionsstab (17B), die auf einem Drehmomentübertragungspfad zwischen einem Lenkrad (2) und einem Lenkmechanismus (4) vorgesehen sind;
einem Elektromotor (23), der konfiguriert ist, um eine Lenkunterstützungskraft auf den Lenkmechanismus (4) aufzubringen;
einem Drehmomentsensor (42), der das Torsionsstabmoment erfasst, das auf den Torsionsstab ausgeübt wird;
einer Eingangswellen-Drehwinkelerfassungseinheit, die konfiguriert ist, um einen Drehwinkel einer Eingangswelle (11) der Übertragungsverhältnis-Variationsvorrichtung (7) zu erfassen; und
einer elektronischen Steuereinheit (50), die konfiguriert ist, um einen Drehwinkel einer Ausgangswelle (12) der Übertragungsverhältnis-Variationsvorrichtung (7) zu erfassen, wobei die Fahrermoment-Schätzvorrichtung **dadurch gekennzeichnet ist, dass**

die elektronische Steuereinheit (50) konfiguriert ist, um einen geschätzten Wert einer ersten Störung aufgrund eines ersten elektrischen Servolenkungsbestandteils zu berechnen, der auf einer Eingangswellenseite der Übertragungsverhältnis-Variationsvorrichtung (7) positioniert ist, durch Verwendung des Drehwinkels der Eingangswelle (11), wobei die erste Störung auf zumindest eines der Elemente, Lenkrad (2) und Eingangswelle (11), zwischen dem Lenkrad (2) und der Übertragungsverhältnis-Variationsvorrichtung (7) wirkt;
die elektronische Steuereinheit (50) konfiguriert ist, um einen geschätzten Wert einer zweiten Störung aufgrund eines zweiten elektrischen Servolenkungsbestandteils zu berechnen, der auf einer Ausgangswellenseite der Übertragungsverhältnis-Variationsvorrichtung (7) positioniert ist, durch Verwendung des Drehwinkels der Ausgangswelle (12), wobei die zweite Störung auf einer Drehwelle zwischen der Übertragungsverhältnis-Variationsvorrichtung (7) und dem Torsionsstab (17b) wirkt; und
die elektronische Steuereinheit (50) konfiguriert ist, einen geschätzten Wert des Fahrermoments basierend auf dem Torsionsstabmoment, dem geschätzten Wert der ersten Störung und dem geschätzten Wert der zweiten Störung zu berechnen.

2. Fahrermoment-Schätzvorrichtung nach Anspruch 1, wobei die elektronische Steuereinheit (50) konfiguriert ist, zumindest eines der Momente, Trägheitsmoment basierend auf dem ersten elektrischen Servolenkungsbestandteil, viskoses Reibungsmoment, Coulomb-Reibungsmoment, Rotationsunwuchtmoment und Spiralkabelmoment, zu schätzen.

3. Fahrermoment-Schätzvorrichtung nach Anspruch 1, wobei die elektronische Steuereinheit (50) konfiguriert ist, um zumindest eines der Momente, Trägheitsmoment basierend auf dem zweiten elektrischen Servolenkungsbestandteil, viskoses Reibungsmoment, Coulomb-Reibungsmoment und Spiralkabelmoment, zu schätzen.

4. Fahrermoment-Schätzvorrichtung nach einem der Ansprüche 1 bis 3, wobei die elektronische Steuereinheit (50) konfiguriert ist, um den Drehwinkel der Ausgangswelle (12) durch Verwendung eines Drehwinkels des Elektromotors (23) und des Torsionsstabmoments zu erfassen.

5. Fahrermoment-Schätzvorrichtung nach einem der Ansprüche 1 bis 3, wobei die elektronische Steuereinheit (50) konfiguriert ist, um den Drehwinkel der Eingangswelle (11) durch Verwendung eines Drehwinkels des Elektromotors (23), des Torsionsstabmoments und einer Drehwinkeldifferenz zwischen der Eingangswelle (11) und der Ausgangswelle (12) zu erfassen.

6. Fahrermoment-Schätzvorrichtung nach einem der Ansprüche 1 bis 4 **dadurch gekennzeichnet, dass** diese des Weiteren einen Drehwinkelsensor (43) aufweist, der konfiguriert ist, um einen Drehwinkel des Lenkrads (2) zu detektieren, wobei die elektronische Steuereinheit (50) konfiguriert ist, um den Drehwinkel der Eingangswelle (11) basierend auf einem Ausgangssignal von dem Drehwinkelsensor (43) zu erfassen.

7. Elektrisches Servolenkungssystem (1) mit der Fahrermoment-Schätzvorrichtung nach einem der Ansprüche 1 bis 6, wobei die elektronische Steuereinheit (50) konfiguriert ist, um basierend auf dem berechneten geschätzten Wert des Fahrermoments zu bestimmen, ob ein Hände-Aktiv-Zustand hergestellt ist oder ein Hände-Inaktiv-Zustand hergestellt ist.

**Revendications**

1. Dispositif d'estimation de couple d'entraînement comprenant :

   un dispositif de variation de rapport de transfert (7) et une barre de torsion (17B) prévue sur une trajectoire de transfert de couple entre un volant (2) et un mécanisme de direction (4) ; un moteur électrique (23) configuré pour appliquer une force d'assistance de direction sur le mécanisme de direction (4) ; un capteur de couple (42) qui acquiert le couple de barre de torsion appliqué sur la barre de torsion ; une unité d'acquisition d'angle de rotation d'arbre d'entrée configurée pour acquérir un angle de rotation d'un arbre d'entrée (11) du dispositif de variation de rapport de transfert (7) ; et une unité de commande électronique (50) configurée pour acquérir un angle de rotation d'un arbre de sortie (12) du dispositif de variation de rapport de transfert (7), le dispositif d'estimation de couple d'entraînement étant **caractérisé par** :

   l'unité de commande électronique (50) qui est configurée pour calculer une valeur estimée de première perturbation due à un premier élément constitutif de direction assistée électrique, qui est positionné du côté de l'arbre d'entrée du dispositif de variation de rapport de transfert (7), en utilisant l'angle de rotation de l'arbre d'entrée (11), la première perturbation agissant sur au moins l'un parmi le volant (2) et l'arbre d'entrée (11) entre le volant (2) et le dispositif de variation de rapport de transfert (7) ; l'unité de commande électronique (50) est configurée pour calculer une valeur estimée de seconde perturbation due à un second élément constitutif de direction assistée électrique, qui est positionné du côté de l'arbre de sortie du dispositif de variation de rapport de transfert (7), en utilisant l'angle de rotation de l'arbre de sortie (12), la seconde perturbation agissant sur un arbre rotatif entre le dispositif de variation de rapport de transfert (7) et la barre de torsion (17b) ; et l'unité de commande électronique (50) est configurée pour calculer une valeur estimée du couple d'entraînement sur la base du couple de barre de torsion, la valeur estimée de la première perturbation et la valeur estimée de la seconde perturbation.

2. Dispositif d'estimation de couple d'entraînement selon la revendication 1, dans lequel l'unité de commande électronique (50) est configurée pour estimer au moins l'un parmi le couple inertiel sur la base du premier élément constitutif de direction assistée électrique, le couple de friction visqueux, le couple de friction coulombien, le couple de déséquilibre rotatif, et le couple de câble en spirale.

3. Dispositif d'estimation de couple d'entraînement selon la revendication 1, dans lequel l'unité de commande électronique (50) est configurée pour estimer au moins l'un parmi le couple inertiel sur la base du second élément constitutif de direction assistée électrique, le couple de torsion visqueux, le couple de friction coulombien et le couple de câble en spirale.

4. Dispositif d'estimation de couple d'entraînement selon l'une quelconque des revendications 1 à 3, dans lequel l'unité de commande électronique (50) est configurée pour acquérir l'angle de rotation de l'arbre de sortie (12) en utilisant un angle de rotation du moteur électrique (23) et le couple de barre de torsion.

5. Dispositif d'estimation de couple d'entraînement selon l'une quelconque des revendications 1 à 3, dans lequel l'unité de commande électronique (50) est configurée pour acquérir l'angle de rotation de l'arbre d'entrée (11) en utilisant un angle de rotation du moteur électrique (23), le couple de barre de torsion et la différence d'angle de rotation entre l'arbre d'entrée (11) et l'arbre de sortie (12).

6. Dispositif d'estimation de couple d'entraînement selon l'une quelconque des revendications 1 à 4, **caractérisé en ce qu'**il comprend en outre un capteur d'angle de rotation (43) configuré pour détecter un angle de rotation du volant (2), dans lequel :
l'unité de commande électronique (50) est configurée pour acquérir l'angle de rotation de l'arbre d'entrée (11) sur la base d'un signal de sortie provenant du capteur d'angle de rotation (43).

7. Système de direction assistée électrique (1) comprenant le dispositif d'estimation de couple d'entraînement selon l'une quelconque des revendications 1 à 6, dans lequel :
l'unité de commande électronique (50) est configurée pour déterminer, sur la base de la valeur estimée du couple d'entraînement qui a été calculée, si un état activé est établi ou si un état désactivé est établi.

# FIG. 1

1

FIG. 2

FIG. 3

ROTATIONAL ANGLE SENSOR — 16

TORQUE SENSOR — 42

ROTATIONAL ANGLE SENSOR — 43

$T_{tb}$

71 — DRIVER TORQUE ESTIMATION UNIT

$T_d$

72 — LOW-PASS FILTER

$T_d{'}$

73 — HANDS-ON/OFF DETERMINATION UNIT

63

# FIG. 4

$T_{c1}$ [N·m]

$G_{c1}$

O

$\dot{\theta}_{sw}$ [deg/sec]

# FIG. 5A

2

C

G

$d_{cg}$

$m \cdot g_{cg}$

# FIG. 5B

~2

C

$\delta$

m · dcg · gcg · cos($\delta$) · sin($\theta$sw)

# FIG. 6

Tru [N · m]

Ggr

270

0    90

$\theta$sw [deg]

FIG. 7

FIG. 8

FIG. 9

EP 3 636 516 B1

TORQUE SENSOR — $T_{tb}$
42

71

$J_{sw} \cdot d^2\theta_{sw}/dt^2$ COMPUTATION UNIT — $J_{sw} \cdot \ddot{\theta}_{sw}$
89

90  $\dfrac{d}{dt}$

91  $T_{c1}$ COMPUTATION UNIT — $T_{c1}$

$T_{fr1}$ COMPUTATION UNIT — $T_{fr1}$

87  $\dfrac{d}{dt}$
86   88

$T_{ru}$ COMPUTATION UNIT — $T_{ru}$

$\theta_{sw}$

$T_{sc1}$ COMPUTATION UNIT — $T_{sc1}$
85

$\theta_{act}$

ROTATIONAL ANGLE SENSOR
43

$\theta_m$ COMPUTATION UNIT — $\theta_m$
81

$\theta_p$ COMPUTATION UNIT — $\theta_p$
82

$\theta_r$ COMPUTATION UNIT — $\theta_r$
83  84

93  $\dfrac{d}{dt}$
94   92

$T_{sc2}$ COMPUTATION UNIT — $T_{sc2}$

$T_{c2}$ COMPUTATION UNIT — $T_{c2}$

$T_{fr2}$ COMPUTATION UNIT — $T_{fr2}$

96  $\dfrac{d}{dt}$
97   95

$J_{vd} \cdot d^2\theta_r/dt^2$ COMPUTATION UNIT — $J_{vd} \cdot \ddot{\theta}_r$

98  +  $T_d$

# FIG. 10

ST4

HANDS-OFF STATE WITH
DRIVER TORQUE MORE
THAN THRESHOLD

entry :
out = 0 ;
during :
hod_timer = hod_timer+Ts ;

ST1

HANDS-ON STATE WITH
DRIVER TORQUE MORE
THAN THRESHOLD

entry :
out = 1 ;
hod_timer = 0 ;

hod_timer ≥ $\gamma$

START OF
COMPUTATION

$|T_d'| > \alpha$

$|T_d'| \leq \alpha$

$|T_d'| > \alpha$

$|T_d'| > \alpha$

$|T_d'| \leq \alpha$

$|T_d'| \leq \alpha$

ST3

HANDS-OFF STATE WITH
DRIVER TORQUE EQUAL TO
OR LESS THAN THRESHOLD

entry :
out = 0 ;
hod_timer = 0 ;

ST2

HANDS-ON STATE WITH
DRIVER TORQUE EQUAL TO
OR LESS THAN THRESHOLD

entry :
out = 1 ;
during :
hod_timer = hod_timer+Ts ;

hod_timer ≥ $\beta$

EP 3 636 516 B1

FIG. 11

EP 3 636 516 B1

**EP 3 636 516 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006151360 A

- EP 1508500 A1